# FASCICULE DE BREVET EUROPEEN

(11) **EP 2 683 172 B1**
(45) Date de publication et mention de la délivrance du brevet: **31.07.2019**
(21) Numéro de dépôt: 13172904.8
(22) Date de dépôt: 19.06.2013
(51) Int. Cl.: H04N 21/218, H04N 21/231, H04N 21/235, H04N 21/266, H04N 21/2747, H04N 21/278, H04N 21/433, H04N 21/436, H04N 21/472, H04N 21/482, H04H 60/74, H04N 21/84, H04H 60/27, H04N 21/232, G06F 16/13

(54) **Gestion de contenus par un ensemble de terminaux**
Datenverwaltung über eine Gesamtheit von Endgeräten
Content management by a set of terminals

(30) Priorité: 02.07.2012 FR 1256332
(43) Date de publication de la demande: 08.01.2014
(73) Titulaire: Orange, 75015 Paris (FR)
(72) Inventeur: Paret, Antoine, 92800 Puteaux (FR); Giovanni, Marc, 22560 Pleumeur-Bodou (FR)
(74) Mandataire: Cabinet Plasseraud

(56) Documents cités:
- US-A1- 2004 117 824
- US-A1- 2006 190 549
- US-A1- 2008 086 754
- US-A1- 2009 198 790

## Description

La présente invention concerne l'accès à des contenus et/ou des flux multimédias et leur gestion à partir d'équipements de lecture et/ou de stockage connectés en réseau.

Le document US2006/0190549 enseigne une architecture informatique pour une application de ce type.

Des utilisateurs peuvent être confrontés à une prolifération de contenus (par exemple des contenus personnels tels que photographies, musiques, ou autres vidéos ou autres documents) et disposent d'un nombre grandissant d'équipements et ou de terminaux pour accéder à ces contenus.

Les solutions techniques suivantes sont connues :
- le stockage en ligne (ou « online storage » mis en oeuvre par exemple dans les services dropbox® ou icloud®),
- le stockage en réseau sur serveur (également appelé «stockage en réseau NAS» pour « Network Attached Storage»),
- un standard définissant les conditions d'une interopérabilité entre différents équipements, éventuellement de différents constructeurs, comme par exemple l'alliance DLNA pour « Digital Living Network Alliance »,
- le partage de contenus en ligne (ou « online sharing », ces services pouvant être proposés par exemple sur Facebook, ou Picasa, ou autres).

Le stockage en ligne présente les principaux inconvénients suivants :
- la capacité de stockage est limitée: les solutions de ce type ne peuvent donc concerner qu'une sous-partie des contenus de l'utilisateur que ce dernier doit sélectionner manuellement ;
- cette solution n'intègre aucunement un fonctionnement selon un standard tel que DLNA ou AirPlay : les solutions de ce type ne peuvent pas s'intégrer avec les équipements connectés de son environnement tant comme sources de contenus (stockage NAS, lecteur/disque dur multimédia, ou autres) que comme « écrans » de lecture (télévision connectée, HiFi connectée, lecteur/disque dur multimédia, console de jeu, stream box, ou autres).

Le stockage en réseau présente comme principal inconvénient l'ajout d'un espace de stockage supplémentaire, introduisant une rupture forte dans les usages par la nécessité pour l'utilisateur d'une opération particulière et spécifique de stockage et d'organisation de ses contenus (typiquement un stockage NAS à la place d'un emplacement habituel par défaut de chacun de ses équipements, par exemple le dossier « Mes Documents » sur son ordinateur PC).

Les solutions normalisées (de type dit « Digital Home », comme un serveur DLNA couplé à un contrôleur DLNA) présentent comme principal inconvénient que les profils d'utilisateurs ne sont pas gérés pour les contenus partagés de sorte qu'un utilisateur ne peut pas retrouver ses contenus personnels (ceux qu'il ne souhaite pas partager par exemple) sur les équipements connectés à un réseau domestique.

Les solutions de partage en ligne présentent les principaux inconvénients suivants :
- la capacité de stockage est limitée,
- aucune intégration de standard DLNA ou AirPlay n'est prévue,
- le partage de contenus entre utilisateurs est limité à certains services en lignes.

La présente invention vient améliorer la situation.

Elle propose à cet effet un procédé de gestion d'une pluralité de contenus stockés dans différentes sources de stockage et accessibles par un ensemble prédéterminé de terminaux connectés en réseau. Le procédé comporte au moins une étape d'agrégation d'index respectifs des contenus accessibles par chacun des terminaux de l'ensemble précité de terminaux, dans une base de données commune pour l'ensemble des terminaux. Chaque index comprend des données d'information sur le contenu (par exemple des métadonnées décrivant le titre du contenu, son auteur, ses interprètes, une affichette, etc., ainsi que les informations d'accès à ce contenu telles que le droit d'utilisateur, la source, l'état de la source, etc.) et représente ainsi ce contenu dans la base de données. En outre, une application d'interface, commune aux terminaux, étant installée dans chaque terminal de l'ensemble précité, chaque terminal peut interroger la base de données et sélectionner un contenu indexé dans la base de données pour accéder au contenu sélectionné depuis ce terminal.

Ainsi, un utilisateur peut gérer (lire, déplacer, envoyer à un tiers, etc.), à l'aide de l'un quelconque de ses terminaux, tout contenu déclaré dans la base de données d'index. L'invention offre alors la possibilité d'effectuer cette gestion commune de tous les contenus de l'utilisateur, où qu'ils soient stockés, à travers l'application d'interface précitée qui peut s'exécuter sur chaque terminal. Cette interface, pour la lecture, la copie, le déplacement, etc., de contenus, peut être enrichie de fonctionnalités d'accessibilité, comme par exemple les fonctionnalités du standard DLNA et de l'AirPlay, mais aussi des fonctionnalités d'adaptation de contenus aux capacités de lecture par exemple du terminal destinataire du contenu, comme on le verra plus loin, ou d'autres fonctionnalités encore.

Dans un mode de réalisation, les index de la base précitée comportent, pour chaque contenu, au moins un pointeur vers une source, et une sélection d'un contenu pour accéder au contenu depuis un terminal comporte une sélection d'un pointeur vers au moins une source stockant ce contenu. Il est ainsi possible de gérer un contenu à partir d'un terminal alors que ce contenu peut être stocké par exemple dans un autre terminal. Avantageusement la question de l'accessibilité au contenu reste transparente pour l'utilisateur grâce à l'interface qu'il utilise.

Dans une réalisation, une modification d'index d'un contenu stocké auprès d'une source génère une mise à jour correspondante de l'index de ce contenu dans la base d'index.
Par exemple, si l'utilisateur décide de déplacer un contenu d'un terminal à un autre, cette modification est mise à jour dans la base. Ainsi, l'information de présence effective d'un contenu dans la mémoire d'un terminal particulier reste à jour auprès de la base de sorte que ce contenu peut être retrouvé à tout moment.

Dans une réalisation, les données d'information sur un contenu comportent au moins une information sur un type de source de contenu, et en particulier, si la source de contenu est un terminal, l'information sur le type de source de contenu caractérise un état allumé ou éteint du terminal (terminal susceptible d'être éteint), ou encore connecté à un réseau ou non connecté.
Une telle réalisation permet avantageusement de ne pas solliciter un contenu auprès d'une telle source de stockage qui risque de ne pas répondre aux requêtes de contenu si elle est éteinte, mais de solliciter ce contenu plutôt auprès d'une autre source s'il a été dupliqué préalablement auprès de cette autre source. On indique en outre que d'autres contenus peuvent être prévus en ligne et accessibles via une interface de fournisseur de contenus, par exemple.

Dans une réalisation, les données d'information sur un contenu comportent avantageusement des données d'identification d'un utilisateur propriétaire du contenu. Cet utilisateur peut par exemple disposer, de ce fait, de tout droit sur le contenu (lecture, déplacement, copie, etc.).

Par ailleurs, on peut prévoir que les données d'information sur un contenu comportent des données d'identification d'au moins un utilisateur avec qui le contenu est partagé, et ce en association avec des données définissant des droits d'utilisation du contenu (lecture seulement, par exemple).

Dans une réalisation, il peut être prévu une étape de copie d'une partie au moins des contenus accessibles par chacun des terminaux de l'ensemble précité, dans une mémoire d'un équipement connecté au réseau et accessible depuis les terminaux.
Dans une telle réalisation, le procédé comporte alors, outre l'étape d'agrégation des index de chaque source de contenus, une étape de copie d'une partie au moins des contenus accessibles par chacun des terminaux de l'ensemble précité, dans une mémoire d'un équipement (cet équipement étant connecté au réseau et accessible depuis les terminaux). Dans un mode de réalisation particulier, la copie est effectuée en fonction d'au moins une information sur le type de source de contenu.
Par exemple, les contenus stockés auprès de terminaux susceptibles d'être éteints ou non connectés sont prioritairement stockés dans cette mémoire. Bien entendu, d'autres critères de priorité peuvent être prévus.

Dans un mode de réalisation, il est prévu en outre une étape d'adaptation de format d'un contenu stocké auprès d'une source de contenu, pour une accessibilité du contenu auprès d'un terminal de l'ensemble de terminaux.
Cette adaptation peut être par exemple une adaptation de format de lecture en fonction du terminal destinataire, une adaptation de résolution du contenu (image ou vidéo) par exemple pour surmonter des conditions de faibles bandes passantes dans la transmission du contenu via un réseau, ou autres.

Dans une réalisation, l'étape d'adaptation est mise en oeuvre auprès d'une passerelle entre un réseau local (auquel sont connectés par exemple une partie au moins des terminaux) et un réseau étendu (auquel est connectée par exemple au moins une source de stockage).

Ainsi, la passerelle peut comporter des moyens conférant une « intelligence » à la source de stockage qui agrège par exemple les contenus. Plus généralement, la passerelle peut être l'équipement-même gérant la base de données d'index et ses mises à jour.

A ce titre, l'invention vise aussi un tel équipement, comme par exemple la passerelle précitée ou en variante un équipement serveur sur un site distant par exemple. L'invention vise ainsi un équipement de gestion d'une pluralité de contenus stockés dans différentes sources et accessibles par un ensemble prédéterminé de terminaux connectés en réseau au moins à l'équipement, et comportant en particulier des moyens de gestion d'une base de données comportant une agrégation d'index respectifs des contenus accessibles par chacun des terminaux de l'ensemble, chaque contenu étant représenté par au moins un index comprenant des données d'information sur le contenu. Avantageusement, la base de données précitée est interrogeable depuis chaque terminal par l'exécution d'une application d'interface installée dans chaque terminal, pour sélectionner un contenu indexé dans la base de données et accéder au contenu sélectionné depuis ce terminal.

Cet équipement peut mettre en oeuvre l'exécution d'un programme informatique à cet effet. L'invention vise alors aussi un programme informatique comportant des instructions pour la mise en oeuvre du procédé ci-avant, lorsque ce programme est exécuté par un processeur.

La présente invention vise aussi, symétriquement, un procédé (côté terminaux) d'accès à une pluralité de contenus stockés dans différentes sources de stockage et accessibles par un ensemble prédéterminé de terminaux connectés en réseau, chaque contenu étant représenté par au moins un index comprenant des données d'information sur le contenu, dans une base de données commune pour l'ensemble des terminaux, cette base de données comportant une agrégation d'index respectifs des contenus accessibles par chacun des terminaux de l'ensemble précité de terminaux.
Ce procédé d'accès comporte en particulier l'exécution d'une application d'interface commune à l'ensemble des terminaux, installée dans chaque terminal dudit ensemble, pour interroger la base de données précitée depuis chaque terminal et sélectionner un contenu indexé dans la base de données pour accéder au contenu sélectionné depuis ce terminal.

Une exécution de l'application d'interface précitée peut mettre en oeuvre au moins un élément de fonctionnalité parmi :
- une recherche de contenu,
- une lecture de contenu,
- un transfert de contenu d'une première source de stockage à une deuxième source de stockage,
- une suppression de contenu auprès d'une première source de stockage de ce contenu,
- une navigation dans les contenus, à partir des métadonnées associées à ces contenus, de manière unifiée et transverse vis-à-vis des sources de contenus,
- une fonction de type « télécommande » pour déclencher la lecture ou plus généralement la restitution d'un contenu sur un équipement de restitution tiers (par exemple un équipement « renderer DLNA » ou « AirPlay »),
- une commande de synchronisation d'un contenu stocké dans une source de stockage vers un terminal d'utilisateur,
- une commande de copie ponctuelle d'un contenu stocké dans une source de stockage vers un terminal d'utilisateur,
- un partage d'un contenu stocké dans une source de stockage avec un autre ou plusieurs autres utilisateur(s),
- etc.

Les éléments de fonctionnalité listés ci-dessus sont donnés à titre d'exemples illustratifs et non limitatifs.

Il peut être prévu aussi, si l'index d'un contenu comporte en outre une donnée de type de contenu, que l'exécution de l'application d'interface précitée mette en oeuvre au moins un élément parmi :
- une organisation des contenus par types de contenus,
- une navigation entre différents types de contenus.

L'invention vise aussi le programme informatique correspondant à cette application d'interface d'accès à un contenu, et comportant alors des instructions pour la mise en oeuvre du procédé d'accès à un contenu présenté ci-dessus, lorsque ce programme est exécuté par un processeur.

L'invention vise aussi plus globalement un système de gestion d'une pluralité de contenus stockés dans différentes sources de stockage et accessibles par un ensemble prédéterminé de terminaux connectés en réseau, comportant :
- au moins un équipement connecté aux terminaux et gérant une base de données commune pour l'ensemble des terminaux, ladite base de données comportant une agrégation d'index respectifs des contenus accessibles par chacun des terminaux dudit ensemble, chaque contenu est représenté par au moins un index comprenant des données d'information sur le contenu,
- chaque terminal comportant des moyens de mise en oeuvre d'une application d'interface commune à l'ensemble des terminaux, pour interroger ladite base de données depuis chaque terminal et sélectionner un contenu indexé dans la base de données pour accéder au contenu sélectionné depuis ledit terminal.

D'autres caractéristiques et avantages de l'invention apparaîtront à la lecture de la description détaillée ci-après présentant des exemples possibles de réalisation, et à l'examen des dessins annexés sur lesquels :
- la figure 1 représente un système au sens de la présente invention,
- la figure 2 représente, dans un exemple de réalisation, une succession d'étapes d'un procédé au sens de l'invention,
- la figure 3 représente schématiquement une base de données d'index pour la mise en oeuvre de l'invention,
- la figure 4 illustre schématiquement une mise à jour d'au moins une entrée de la base de données d'index à partir de l'index d'un contenu et d'informations liées au contenu,
- la figure 5 illustre schématiquement l'agrégation des index de contenus dans une base de données d'index,
- la figure 6 illustre schématiquement un stockage des copies de contenus dans un espace de stockage,
- la figure 7 représente un exemple d'interface home-machine proposant à l'utilisateur la sélection d'un contenu indexé dans la base,
- la figure 8 représente la mise à jour d'une copie de contenu et la mise à jour de l'index de la copie de ce contenu dans l'espace de stockage.

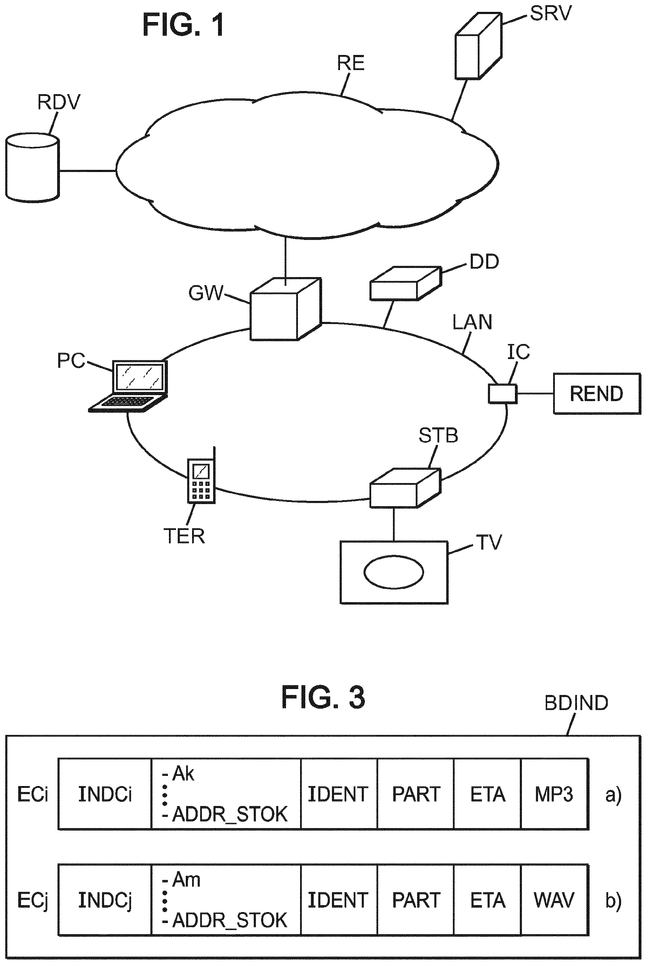

On a représenté sur la figure 1 un ensemble de terminaux comprenant par exemple :
- un ordinateur PC,
- un terminal téléphonique par exemple de type smartphone TER,
- un terminal de réception de données notamment vidéo de type « Set-Top-Box » STB, relié à un poste de télévision TV (ou en variante une télévision directement connectée),
- un disque dur de stockage DD,
- un équipement général de lecture de contenus multimédias comprenant un dispositif de lecture du contenu REND (pour « renderer » ou « player »), et une interface de connexion IC à un réseau local LAN (pour « Local Area Network »).

Ces différents terminaux PC, TER, DD, STB, etc., sont reliés via le réseau local LAN à une passerelle GW entre le réseau local LAN et un réseau étendu RE (par exemple Internet).

Le réseau LAN interconnecte les terminaux précités en permettant un échange de données d'un terminal à un autre.

On a aussi représenté sur la figure 1 un serveur de rendez-vous RDV connecté au réseau étendu RE. L'une des fonctions du serveur de rendez-vous RDV est de réaliser une médiation entre les services et les ressources disponibles via le réseau étendu RE et la passerelle GW.

Les contenus d'un utilisateur sont typiquement stockés sur au moins un des terminaux TER, PC, ou autres équipements de l'utilisateur. Par ailleurs, l'utilisateur se sert d'un terminal TER pour accéder à ses contenus ou à d'autres contenus tels que des contenus communautaires ou publics hébergés dans des sources de contenus reliées au réseau étendu (par exemple une source de contenus dans un serveur Internet, portant la référence SRV sur la figure 1).

Les sources de contenus possibles peuvent être des sources personnelles (l'ordinateur PC/Mac, le smartphone TER, une tablette, un disque dur DD privé, un disque dur réseau (NAS), un lecteur ou un disque dur multimédia, ou autre) et/ou d'autres types de sources de contenus telles que les comptes Facebook®, Deezer® ou Picasa®.

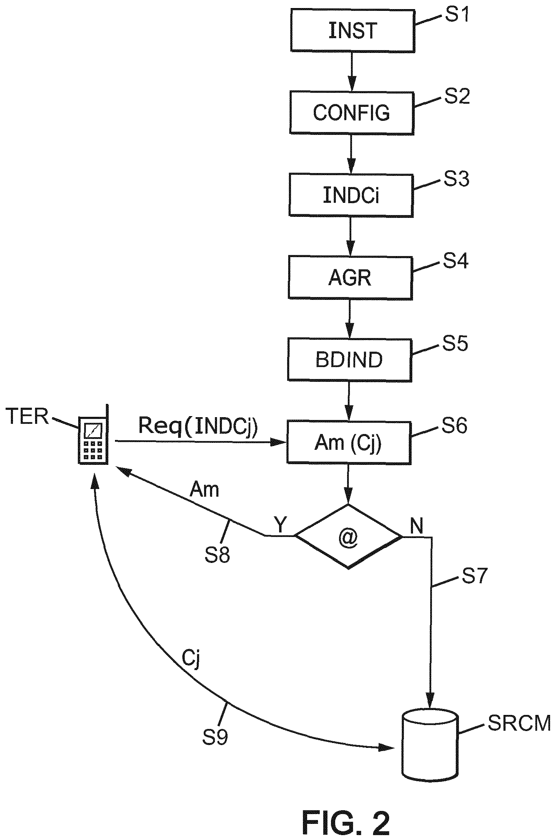

On a représenté sur la figure 2 un exemple de réalisation d'une succession d'étapes d'un procédé au sens de l'invention. Ce procédé comporte globalement :
- une phase initiale S1 d'installation d'une application sur chaque terminal ou équipement personnel de l'utilisateur ;
- une étape suivante S2, de configuration, précisée ci-après ;
- une étape S3, d'obtention de métadonnées comportant des informations sur chaque contenu et de création d'index de contenus en fonction desdites métadonnées ;
- une étape suivante S4 d'agrégation des index des contenus dans une base de données d'index BDIND ;
- une étape S5 de mise à jour de la base de données d'index en fonction des modifications des contenus de chaque source de stockage ;
- des étapes (S6 à S9) courantes de consultation de la base de données d'index et de gestion de contenus à partir d'informations de la base de données d'index.

L'étape S1 peut par exemple consister à installer dans chaque terminal d'un groupe choisi de terminaux (et/ou espaces de stockage), une application d'accès à des contenus stockés dans d'autres terminaux ou espaces de stockage du groupe choisi précité (comme celui représenté sur la figure 1), avec en outre une application de lecture possible de ces contenus sur chacun de ces terminaux.

L'installation de cette application sur un ensemble choisi de terminaux de l'utilisateur permet effectivement de fournir à l'utilisateur, de manière générale, la possibilité de gérer tous ses contenus à partir d'un quelconque terminal de cet ensemble. L'installation de l'application peut se faire avantageusement sur les équipements réseaux, et en particulier sur la passerelle GW. Dans un mode de réalisation, la base de données d'index peut être stockée sur un routeur tel que la passerelle GW (ou en variante sur un serveur distant SRV décrit plus loin).

L'installation de l'application peut s'effectuer, outre sur les terminaux de l'ensemble précité, sur un espace de stockage tel qu'un disque dur DD en réseau et/ou sur des équipements de sites hébergeant des sources de contenus (par exemple le serveur SRV de la figure 1).

L'installation de l'application génère un environnement pour la création de la base de données d'index et génère l'instauration de passerelles informatiques pour l'interconnexion des terminaux et/ou sites et/ou services tiers avec l'environnement de la base de données d'index. Les sites et/ou services tiers interconnectés à la base de données d'index sont par exemple Deezer®, Facebook®, Picasa® ou autres.

Plus généralement, une passerelle informatique, une fois installée dans une entité telle qu'un terminal, un équipement distant tel que le disque dur DD ou un ou plusieurs équipements de sites et/ou de services tiers, sert à échanger des informations entre cette entité et l'entité gérant la base de données des index (par exemple la passerelle GW stockant la base de données des index).

L'échange d'informations peut s'effectuer en pratique par l'intermédiaire de passerelles informatiques ou API pour « Application Program Interface », typiquement ici des API de services. Le choix des passerelles informatiques n'est cependant pas limité aux APIs.

Les échanges d'informations entre la base de données d'index et un ou plusieurs sites ou services peuvent être bidirectionnels (par exemple en formulant une requête de contenu et en obtenant une information de localisation de ce contenu, ou en sens inverse, la passerelle envoie une demande de mise à jour d'index de contenu et la source stockant ce contenu envoie les informations demandées). Les informations ainsi échangées entre l'entité gérant la base de données d'index, les terminaux, les équipements, l'espace de stockage et les sites peuvent comporter les informations de la figure 3 telles que l'index INDCi du contenu Ci, une adresse Ak de source de contenu, le type de contenu (photo, vidéo, musique, document), un droit d'utilisateur, un état de la source, etc. Cette liste n'est toutefois pas restrictive ou exhaustive. Les éléments de cette liste sont décrits en détails plus loin en référence à la figure 3 et à l'étape S4 de la figure 2.

Les passerelles informatiques installées dans les terminaux et autres équipements facilitent en outre l'agrégation des index et la mise à jour d'entrées de la base de données d'index.

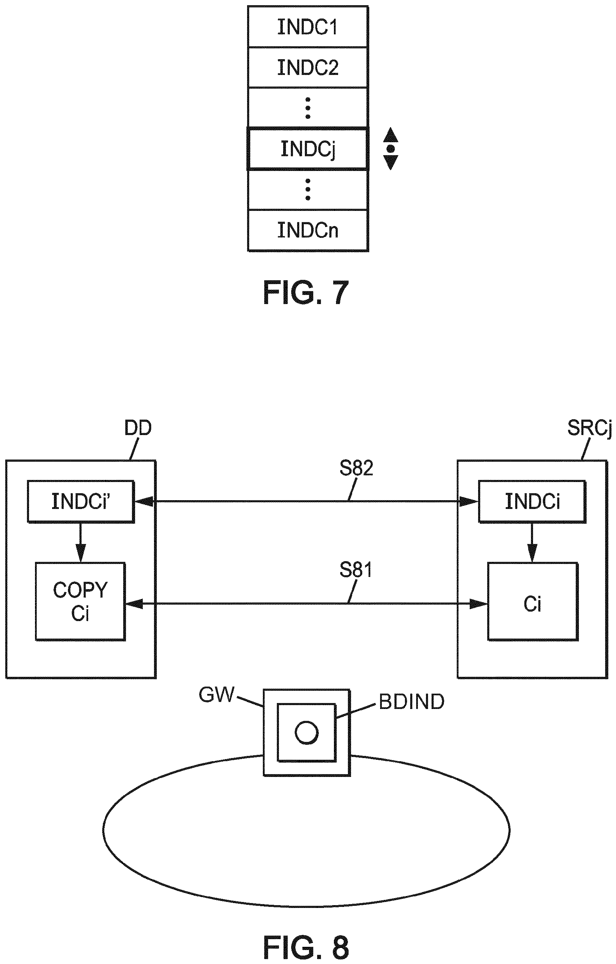

L'installation de l'application sur un terminal à l'étape S1 (figure 2) s'accompagne en outre par l'installation sur ce terminal d'une interface homme/machine permettant avantageusement à un utilisateur d'accéder à ses contenus stockés par exemple par d'autres de ses terminaux sur lesquels l'application est installée. La figure 7 illustre schématiquement un exemple d'interface home/machine proposant à l'utilisateur la sélection d'un contenu en fonction d'un élément de son index. La sélection par l'utilisateur (en gras) génère une requête de ce contenu, laquelle sera décrite en détail plus loin. Dans un exemple de gestion et de commande à distance des contenus, les contenus sont sélectionnables par exemple dans une page commune présentant une liste des contenus avec des données sur ces contenus (titre, auteur, etc.), ou encore dans une représentation en arborescence des contenus (avec une branche commune pour un même auteur, par exemple).

Ainsi, la figure 7 représente schématiquement l'écran d'une interface homme/machine montrant une vue commune de contenus stockés pourtant par différentes sources de contenus. Cette vue commune, unifiée, est avantageusement possible grâce à l'agrégation et la mise à jour des index décrite ultérieurement et/ou par le stockage des contenus dans un espace de stockage.

L'interface de l'application est accessible à l'utilisateur à l'aide d'un compte utilisateur et/ou en entrant par exemple un identifiant et un mot de passe. Pendant la phase de configuration S2 (figure 2), les informations d'accès tels que l'identifiant et le mot de passe d'un utilisateur peuvent être enregistrées pour être demandées ultérieurement lorsqu'un utilisateur ouvre l'application d'interface homme-machine permettant d'accéder à la liste des contenus stockés par les différents terminaux et/ou équipements distants.

Pour chaque compte utilisateur, on associe un ensemble de contenus et de sources de contenus. Pour chaque contenu et chaque source de contenus, on associe un ou plusieurs identifiants d'utilisateur (une source pouvant être purement personnelle, ou au contraire partagée).

Dans une étape ultérieure S2, il est possible de configurer l'espace de stockage accessible par cette application sur chaque terminal, par exemple en définissant un répertoire dédié dans une mémoire d'un terminal, ou encore en sélectionnant chaque contenu auquel on peut accéder via l'application précitée.

A l'étape S3 suivante, une entité choisie, par exemple la passerelle GW précitée, peut jouer le rôle de gestionnaire de contenus médias (ou « média hub » en anglais). A cet effet, elle collecte (par exemple par requêtes ou « polling »), parmi les métadonnées de chaque contenu, des informations d'index permettant de construire une base de données d'index à l'étape d'agrégation S4 suivante.

Ici, on entend par « informations d'index » une sélection de métadonnées parmi un ensemble de métadonnées associées à un contenu et servant à identifier ou à décrire un contenu ou des données d'organisation de ce contenu (classement, lieu de stockage, référencement des contenus, ou autres). On rappelle qu'une métadonnée comprend typiquement une collection de données contenant des informations sur le contenu qu'elle décrit. Par exemple, une métadonnée décrivant un contenu vidéo peut contenir le nom de la vidéo, le nom de l'artiste, la résolution de la vidéo, etc., ou encore d'autres données enrichies et fournies par l'utilisateur comme par exemple un tag personnel sur une photo ou autre. Les index retenus parmi ces métadonnées sont par exemple, pour un contenu donné, un titre de contenu Ci et au moins la référence d'un espace de stockage de ce contenu dans l'un des terminaux par exemple. Il est alors possible de créer, à partir de ces métadonnées, une vignette graphique (ou « miniature ») représentant le contenu. Par exemple, une imagette de dimensions réduites en nombre d'octets de stockage en mémoire peut représenter une photographie numérique de plus grande résolution, ou encore une affiche d'un contenu de type film par exemple.

A l'étape S3, les index des contenus sont obtenus depuis les différentes sources de contenus auxquelles peut accéder l'utilisateur. Les sources de contenus peuvent être des terminaux de l'utilisateur (un Smartphone, une tablette, etc.) et autres équipements domotiques connectés (ordinateur personnel, disque dur réseau, disque dur multimédia, set top box ou « stream box », etc.). Les index de contenus peuvent être également obtenus depuis d'autres sources de contenus communautaires, par exemple les espaces réseaux communautaires accessibles via des comptes Internet (Facebook®, Deezer®, Picasa®), les serveurs dédiés de contenus (e.g streaming, vidéo, radio), les sites Internet.

On décrit ci-après la création de la base de données d'index elle-même.

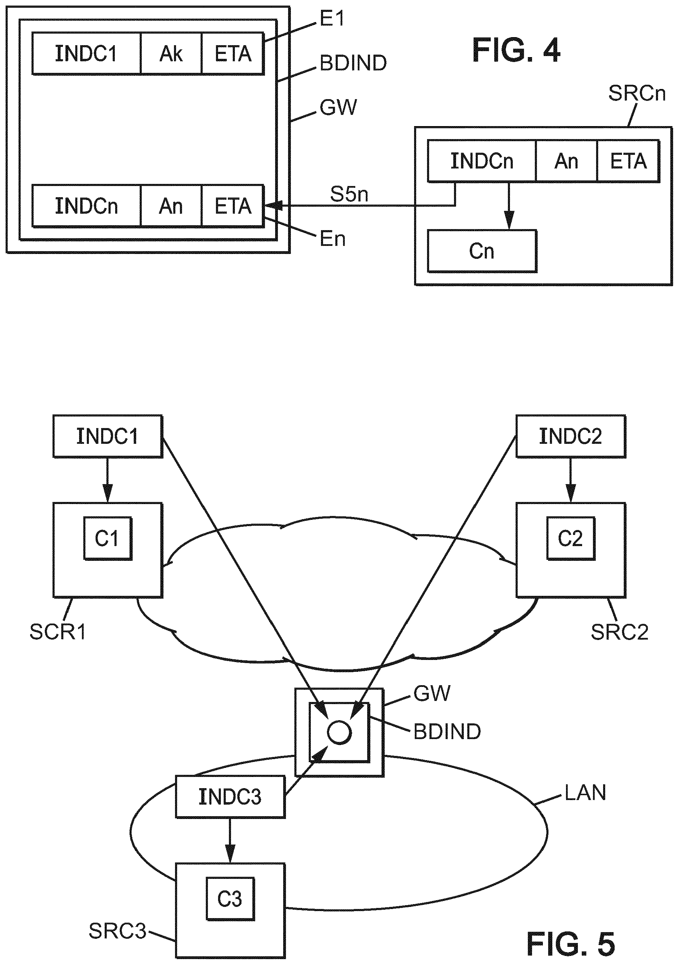

A l'étape S4 d'agrégation, les index respectifs des contenus accessibles sont agrégés dans une base de données d'index commune pour l'ensemble des terminaux et équipements de l'utilisateur. La figure 5 illustre schématiquement l'agrégation des index INDEX1, INDEX2, INDEX3 index respectifs des contenus C1, C2 et C3 dans une base de données BDIND.

On construit initialement une base de données d'index (figure 3) comportant un ensemble d'entrées dont chaque entrée ECi comporte, dans un exemple de réalisation :
- un index du contenu INDCi (comportant les métadonnées indiquant le titre du contenu Ci, et éventuellement sa date de création, son auteur, etc.) ;
- au moins un moyen d'accès MAk (k=1 à K) au contenu Ci stocké dans une source de stockage , par exemple l'un des terminaux reliés au réseau LAN, le serveur distant SRV ou encore la passerelle GW elle-même ; dans l'exemple particulier décrit ici, le moyen d'accès MAk est une URL complète comprenant une adresse IP (ou MAC dans un réseau local) de la source de stockage du contenu Ci et un chemin d'accès au contenu Ci dans cette source de stockage ;
- dans le cas où au moins une copie de ce contenu Ci est stockée dans un emplacement de stockage d'une source, un moyen d'accès ADDR-STOK à cette copie du contenu Ci, comprenant ici une URL complète comportant une adresse IP (ou MAC dans un réseau local) de la source de stockage et un chemin d'accès à la copie du contenu Ci dans cette source de stockage ;
- le champ ETA comprenant au moins une information complémentaire sur le type de source de contenus d'adresse Ak (par exemple le type de terminal « smartphone » ou « tablette » ou « PC », permettant de donner des priorités de copie de leurs contenus en raison d'une accessibilité différente entre ces équipements) et/ou des informations sur l'accès au contenu. Par exemple, un terminal téléphonique est susceptible d'être éteint plus souvent qu'une passerelle ou qu'un disque dur en réseau. Ainsi, la priorité de copie de contenus est donnée aux contenus d'un terminal téléphonique dans cet exemple. Ainsi, le champ ETA peut donner l'état de la source : accessible ou non ;
- le champ IDENT comprenant la liste des identifiants utilisateurs (au moins un) auxquels appartient le contenu Ci et ayant un droit d'utilisation complet sur le contenu Ci (lecture, écriture, modification, copie, déplacement, suppression, etc.) ;
- le champ PART comprenant la liste des identifiants utilisateurs (aucun ou plusieurs) avec qui le contenu a été partagé et ayant un droit d'accès au contenu Ci uniquement en lecture, par exemple, et en option, à un droit de copie.

On soulignera ici qu'un contenu appartenant à un utilisateur propriétaire, qui possède un droit d'utilisation complet sur ce contenu, peut être partagé avec d'autres utilisateurs. Par défaut, le contenu n'est pas partagé. Pour le partager, l'utilisateur propriétaire doit déclarer un ou plusieurs autres utilisateurs avec qui il souhaite partager ce contenu. Les identifiants de ces autres utilisateurs sont alors listés dans le champ (PART) associé au contenu. L'utilisateur propriétaire peut par exemple partager avec d'autres utilisateurs identifiés, un ou plusieurs contenus sélectionnés, tous ses contenus stockés sur une source donnée ou encore tous ses contenus stockés sur différentes sources.

La base de données d'index est alors liée aux terminaux d'un utilisateur et/ou aux équipements de services tiers hébergés sur des sites extérieurs. Ainsi, une base de données complète d'index est propre à un utilisateur particulier.

Dans un mode de réalisation, la base de données d'index BDIND peut être stockée dans un routeur tel qu'une passerelle, par exemple la passerelle GW entre le réseau étendu RE et le réseau LAN de la figure 1.

A titre d'exemple, la figure 3 illustre l'agrégation de plusieurs index dont INDCi et INDCj dans la base de données d'index BDIND.

A l'étape S5, les données de la base de données d'index BDIND sont stockées en mémoire par exemple de la passerelle GW. Ensuite, à l'étape S6, l'utilisateur gère l'un de ses contenus en sélectionnant l'index de ce contenu et la validation de cette sélection par l'utilisateur provoque l'envoi d'une requête de récupération de ce contenu.

Plus précisément, lorsque l'utilisateur souhaite un contenu Cj, son terminal TER émet une requête d'obtention d'un contenu Cj (contenant au moins un élément de son index INDCj : son titre ou simplement son auteur par exemple), comme illustré sur la figure 7, à destination de l'entité stockant la base de données d'index BDIND, par exemple la passerelle GW. Ainsi, à l'étape S6, la requête contenant au moins un élément de l'index INDCj du contenu ou l'index INDCj du contenu Cj est envoyée par le terminal TER à la passerelle GW stockant la base de données BDIND. Dans un exemple de réalisation, un processeur de la passerelle consulte la base de données d'index à l'étape S6 et en particulier si l'adresse Am du contenu Cj est présente dans un des champs de l'entrée de l'index INDCj, alors :
- la requête d'obtention du contenu Cj peut être envoyée, à l'étape S7, à l'adresse de l'emplacement Am du contenu;
- ou alternativement l'adresse de l'emplacement du contenu Am peut être envoyée directement au terminal à l'étape S8.

On a représenté schématiquement sur la figure 2 un espace de stockage SRCm, stockant le contenu Cj (par exemple un espace mémoire dédié d'un terminal, un espace de stockage tel qu'une mémoire distante DD, ou toute autre source de contenu).

Enfin, à l'étape S9, une copie du contenu Cj peut être envoyée au terminal depuis l'entité stockant le contenu Cj. Alternativement, à l'étape S9, le terminal peut directement accéder à l'entité stockant le contenu Cj pour la lecture du contenu Cj, en mettant par exemple en oeuvre une technique de transcodage décrite plus loin.

L'affichage de ces vignettes ou plus généralement des données associées à un contenu peut être configuré. Par exemple, il peut être prévu de tenir compte de préférences d'affichage de contenus d'un utilisateur, typiquement pour des sources de contenus personnels (ordinateur, smartphone, tablette) et pour des espaces en ligne (comptes Facebook, Deezer, Picasa, ou autres), d'une part, et des variantes de préférences pour des utilisations collectives, pour des sources de contenus domestiques (équipements connectés à un réseau local LAN, tels un disque dur réseau, un lecteur de disque dur multimédia, un équipement de type stream box, ou autres), d'autre part.
On peut ainsi présenter via l'interface homme/machine précitée, par exemple à chaque utilisateur, plusieurs vues possibles des contenus suivant des critères et filtres d'affichage prédéfinis : par type de contenu (photo, musique, vidéo et autres documents), par type de sources de contenus, par équipements, par date d'enregistrement/modification, ou autres. Il est possible de classifier les contenus selon le type de vue utilisée :
- par exemple selon une vue par type de contenu, où les photographies numériques par exemple sont classées par date/albums/lieux/visages, les musiques par genre/artistes/albums/liste de lecture, les vidéos par genre/titre/date, etc.
- par exemple selon une vue par type d'équipements, où les contenus sont classés suivant une arborescence de stockage parcourue dans l'équipement.

Un utilisateur peut alors naviguer et rechercher ses contenus de manière intuitive en fonction de son besoin défini par des critères personnels et non plus en fonction de leur localisation uniquement. Par exemple, la vue construite pour un utilisateur peut présenter les contenus en fonction de leurs disponibilités respectives, ces vues étant avantageusement accessibles sur l'ensemble des équipements personnels de l'utilisateur. La vue ainsi construite peut être ainsi accessible pour tout lecteur DLNA et contrôleur compatible DLNA / AirPlay, comme on le verra plus loin.

On décrit ci-après une mise à jour de l'index d'un contenu dans la base de données BDIND.

Une mise à jour de l'index d'un contenu est prévue afin qu'une modification des métadonnées d'un contenu stocké auprès d'une source génère une mise à jour homologue de l'index de ce contenu dans la base de données d'index.

On peut bien entendu modifier par exemple la localisation du stockage d'un contenu dans la mémoire de l'un de ces terminaux et/ou équipements. Il s'en suit une modification des index relatifs à ce contenu, comme décrit ci-après en référence à la figure 2 à nouveau.

En effet, l'étape S5 de la figure 2 comporte à titre d'exemple une mise à jour de la base de données d'index pour gérer un changement des métadonnées associées à un contenu Ci. Ici, l'index INDCi dans la base de données d'index est mis à jour avec les informations de métadonnées de la source de contenu. Par exemple, un contenu peut être déplacé dans l'arborescence de l'espace de stockage de sa source. Une telle modification génère une modification des métadonnées qui lui sont associées.

La mise à jour de l'index dans la base de données d'index peut être effectuée sur la base d'une mise à jour des métadonnées du contenu, avec par exemple :
- une mise à jour de l'adresse Ak (et/ou d'autres adresses d'espaces de stockages ADDR-STOK) de l'emplacement du contenu dans la mémoire d'un équipement ou autre espace de stockage (par exemple via un site Internet) ;
- une mise à jour de l'information du champ ETA sur l'état de disponibilité de la source stockant le contenu (par exemple si le terminal est éteint ou allumé) et/ou sur la nature de la source elle-même (notamment en cas de changement d'adresse Ak) ;
- une mise à jour éventuelle d'autres champs (PART et/ou IDENT), avec par exemple une mise à jour des identifiants associés à ce contenu, pour autoriser un accès à de nouvelles personnes avec qui ce contenu est désormais partagé, dès lors qu'il a été déplacé dans un nouvel espace de stockage par exemple.

Dans un mode de réalisation, la mise à jour précitée comporte une synchronisation entre les métadonnées des contenus et les index de contenus dans la base de données d'index. L'utilisateur peut alors accéder en temps réel à ses différents répertoires et fichiers ou données tels qu'il les a organisés en dernière date (albums photos, listes de musique, etc.).

On décrit ci-après en référence à la figure 4 une mise à jour de la base de données d'index BDIND à partir d'index de contenus.

La figure 4 illustre de façon additionnelle une action S5n de mise à jour d'une entrée En de la base de donnée d'index BDIND. Cette mise à jour comprend l'action de copier l'index INDCn du contenu Cn ainsi que l'ensemble des informations liées au contenu Cn de la source SRCn sur la base de données d'index BDIND.

On peut prévoir pour la mise en oeuvre de cette étape S5 deux modes de réalisation possibles.
Dans un premier mode, l'entité gérant la base BDIND consulte une horloge pour émettre régulièrement des messages d'interrogation des sources de contenus et récupérer des métadonnées de contenus correspondants pour mettre à jour la base. En outre, la modification d'une métadonnée d'un contenu stocké auprès d'une source de contenus génère une mise à jour homologue de l'index de ce contenu dans la base de données d'index (par exemple après l'expiration d'une période de mise à jour).

Dans un deuxième mode, une routine est installée auprès de chaque source pour émettre, à destination de l'entité gérant la base, une notification signalant chaque changement de métadonnées associées à un contenu qu'elle stocke.

On peut prévoir bien entendu une combinaison des deux modes de réalisation pour réaliser une mise à jour ciblée des métadonnées effectivement modifiées et ce dans une période donnée.

Ainsi, les mises à jour consécutives ne dépendent pas nécessairement d'une intervention manuelle de l'utilisateur.

Par ailleurs, dans une réalisation, la base de données d'index est copiée sur l'un au moins des terminaux de l'utilisateur. Une telle réalisation facilite avantageusement la gestion des contenus de l'utilisateur à partir de ce terminal. Il peut être prévu une mise à jour de la copie de la base de données d'index sur ce terminal, synchronisée par exemple avec la mise à jour de la base auprès de l'entité qui la gère. Cette synchronisation peut s'effectuer selon l'un et/ou l'autre des premiers et second modes de réalisation de mise à jour précités, auprès du terminal.

Ainsi, à l'étape S6, l'envoi d'une requête comportant au moins une information de l'index d'un contenu Cj ou l'index du contenu Cj peut se faire localement auprès du terminal et la récupération de l'adresse de stockage du contenu peut s'effectuer localement et non pas à partir d'une base de données distante. Une utilisation locale de la base de données d'index sur un terminal permet alors d'optimiser la gestion des contenus par un terminal en réduisant par exemple le temps de latence dans l'envoi d'une requête de demande de contenu.

Dans un mode de réalisation, on prévoit une copie d'au moins un contenu depuis une source ou plusieurs sources de contenus vers un espace de stockage à partir d'informations présentes dans la base de données d'index.

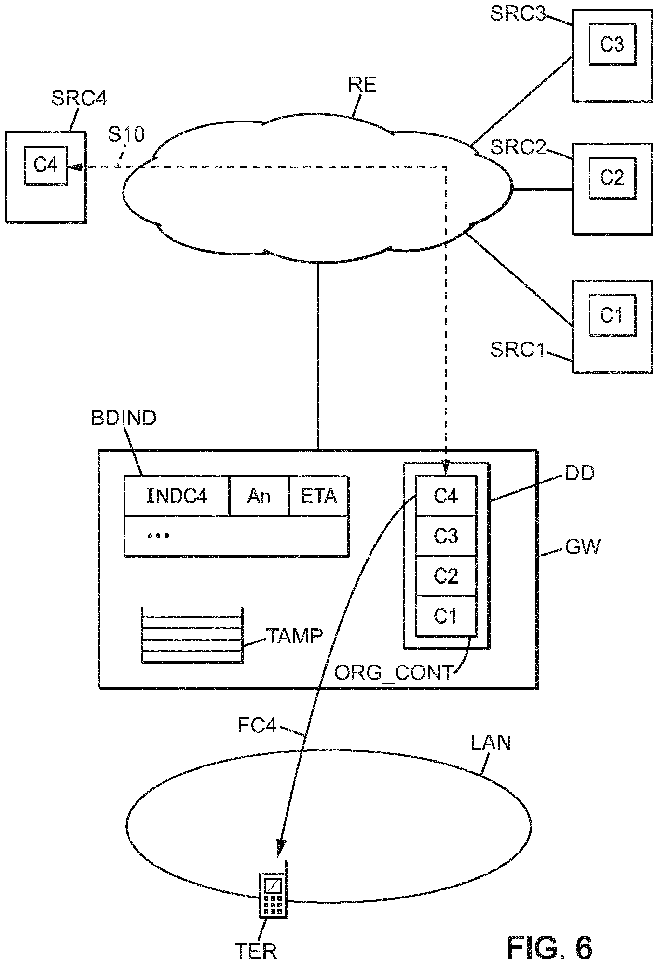

Par exemple, une copie d'un contenu peut être réalisée sur la base de l'information du champ ETA sur le type ou l'état de l'entité de la source de ce contenu. Ainsi, si l'entrée ECi de l'index INDCi du contenu Ci (Figure 3a) dans la base de données d'index BDIND comporte l'information du champ ETA indiquant que la source du contenu Ci est un équipement susceptible d'être souvent indisponible (par exemple une tablette ou un Smartphone étant souvent éteints), alors une copie du contenu Ci peut être réalisée depuis cet équipement vers un espace de stockage. On a représenté sur la figure 6 la référence DD désignant un espace de stockage des copies de contenus. Il peut s'agir d'un disque dur installé sur le réseau LAN domestique, ou alternativement d'une mémoire d'un équipement du réseau étendu RE, tel un routeur de connexion ou un serveur. Sur chaque terminal de l'ensemble des terminaux de l'utilisateur, la base de données BDIND est adressable par l'application d'interface présentant les contenus stockés, par exemple pour filtrer par source de contenus les contenus stockés. Ainsi, il est possible de visualiser sur l'un de ces terminaux tous les contenus stockés sur l'espace de stockage DD.

Dans l'exemple décrit ici, une mise à jour de la copie d'un contenu stockée Ci sur l'espace de stockage DD est prévue afin qu'une modification du contenu sur une source de contenu génère une mise à jour homologue de la copie de ce contenu dans l'espace de stockage DD.
On peut bien entendu modifier, ajouter, ou même supprimer un contenu dans une mémoire d'une source de contenus. Il s'en suit une modification correspondante de la copie de ce contenu, dans l'espace de stockage DD, comme décrit ci-après en référence à la figure 8.
En effet, on a représenté sur la figure 8 la mise à jour S81 d'une copie du contenu Ci dans l'espace de stockage DD. Dans l'exemple décrit ici, chaque mise à jour peut se faire par la collecte du contenu Ci auprès de la source SRCj et l'envoi d'une copie de Ci à l'espace de stockage DD à l'aide d'au moins un flux S81 transportant le contenu Ci.
Par ailleurs, un flux de transport du contenu Ci peut être sollicité régulièrement par une requête envoyée depuis l'espace de stockage DD à la source SRCj. Par exemple, la copie du contenu Ci dans l'espace de stockage DD peut être mise à jour à chaque mise à jour du contenu Ci dans la source de contenu SRCj.
De plus, l'ajout ou la suppression d'un contenu de la source de contenu génère également un ajout ou une suppression de la copie de ce contenu dans l'espace de stockage DD, et une mise à jour correspondante des index dans la base BDIND.
Plus généralement, la mise à jour de la copie d'un contenu comprend également la mise à jour de l'index de la copie de ce contenu dans l'espace de stockage DD.
On a représenté sur la figure 8 la mise à jour illustrée schématiquement par la flèche S82, de l'index INDC'i de la copie du contenu Ci. Cette mise à jour peut être effectuée simultanément à une mise à jour de la copie du contenu Ci (S81 sur la figure 8). Apres une telle mise à jour, l'index INDC'i est identique à l'index INDCi.

Dans un mode de réalisation, la mise à jour précitée comporte une synchronisation entre cet espace de stockage DD contenant les copies des contenus et l'un au moins des équipements (terminaux de l'utilisateur et autres sources de contenus). La synchronisation peut se faire par interrogations régulières des sources de contenus, et/ou par notification de l'un des équipements à destination de l'espace de stockage DD, à chaque modification/ajout/suppression de contenu de la mémoire de cet équipement. L'utilisateur peut alors gérer ses différents contenus en accédant directement à l'espace de stockage où sont stockées les copies mises à jour de ses contenus et non pas en accédant aux sources de contenus elles-mêmes, lesquelles peuvent ne pas être disponibles (comme indiqué précédemment, en ce qui concerne un équipement de type smartphone ou tablette). Cet accès se fait de façon transparente pour l'utilisateur, le système gérant l'accès au contenu sur un espace de stockage en fonction de la disponibilité et de la proximité de celui-ci.

On décrit ci-après, en référence à la figure 2, les étapes réalisées lorsqu'un utilisateur souhaite obtenir un contenu Cj qui a déjà été copié sur l'espace de stockage DD.
Une requête d'obtention d'un contenu Cj est envoyée à partir d'un terminal de l'ensemble prédéterminé des terminaux à destination de l'entité gérant la base de données d'index (passerelle GW par exemple). La requête comprend au moins une information de l'index ou l'index INDCj du contenu à obtenir.
Lorsque la requête d'obtention du contenu arrive à l'entité gérant la base d'index BDIND, un processeur de cette entité consulte la base de données d'index (à l'étape S6).

Si la base de données d'index contient au moins une information complémentaire indiquant qu'une copie du contenu à obtenir est stockée dans un espace de stockage DD, à l'adresse ADDR-STOK (figure 3b) alors cette adresse est obtenue depuis la base de données d'index BDIND. Les informations complémentaires peuvent se trouver dans le champ ETA de la base de données d'index BDIND.
La requête d'obtention de contenu Cj est envoyée, à l'étape S7, à l'adresse ADDR-STOK de l'espace de stockage où le contenu Cj est copié. Ensuite, l'obtention de la copie du contenu Cj auprès de l'espace de stockage DD se fait par l'exécution d'un programme analysant au moins une information de l'index ou l'index INDCj du contenu Cj lui même. En se basant sur au moins une information de l'index INDCj ou sur l'index INDCj contenu dans la requête, la copie du contenu Cj peut être sélectionnée auprès de l'espace de stockage. Il faut noter comme précédemment indiqué que l'index INDC'j de la copie du contenu Cj et l'index INDCj du contenu Cj sont identiques suite à la mise à jour des index de contenus entre l'espace de stockage DD et la source du contenu Cj. Ensuite, une réponse à la requête est envoyée depuis l'espace de stockage à destination du terminal TER, cette réponse comportant la copie du contenu Cj initialement demandée (étape S9). Alternativement, suite à l'étape de consultation, si l'adresse de l'espace de stockage DD est envoyée directement au terminal à l'étape S8, le terminal peut accéder à la copie du contenu Cj à l'étape S9 auprès de l'espace de stockage DD pour par exemple la lecture du contenu Cj.

L'affectation d'une valeur particulière, choisie, dans le champ ETA relativement à un contenu Ci de la base de données BDIND, peut signifier que la source stockant habituellement ce contenu Ci est un terminal susceptible d'être éteint, et qu'une copie du contenu Ci doit être effectuée auprès de l'espace de stockage DD, dans la mesure où la copie a été autorisée par l'utilisateur propriétaire du contenu par paramétrage. A cet effet, l'équipement gérant la base BDIND peut par exemple commander une transmission, pour copie, des données du contenu Ci depuis la source de ce contenu vers l'espace de stockage DD. Cette opération peut intervenir au moment de la création de l'index INDCi du contenu Ci dans la base BDIND.
Ensuite, lorsqu'un utilisateur cherche à obtenir le contenu Ci, la valeur dans le champ ETA propre au contenu Ci peut indiquer en outre qu'une copie du contenu est accessible depuis l'espace de stockage DD et peut donc être obtenue depuis l'espace de stockage DD. Une telle réalisation permet avantageusement d'éviter des délais d'attente d'un contenu auprès d'une source qui peut être indisponible au moment de la requête d'obtention du contenu.
On a représenté sur la figure 6 une base d'index BDIND contenant au moins une entrée d'index INDC4 d'un contenu C4 dont la valeur de champ ETA indique par exemple que la source de contenus SRC4 est hébergée sur un terminal TER de type smartphone ou tablette. Ainsi, l'obtention du contenu C4 (ou de la copie du contenu C4) s'effectue auprès de l'espace de stockage DD en priorité pour éviter les latences qui interviendraient si la tentative d'obtention du contenu se faisait directement auprès d'un terminal éteint. A titre illustratif, la flèche FC4 sur la figure 6 indique un flux de transfert du contenu C4 de l'espace de stockage DD vers le terminal TER pour l'obtention du contenu C4 sur le terminal TER.
Bien entendu, d'autres critères que la nature de la source de contenu peuvent être retenus pour gérer la priorité à accorder à un contenu avant sa copie sur l'espace de stockage DD. Par exemple, les informations suivantes peuvent servir de critères pour établir des priorités régissant l'ordre dans lequel des contenus sont copiés et leurs copies transférées vers l'espace de stockage :
- La date de création du contenu ;
- La date de dernier accès au contenu ;
- La date de dernière modification du contenu ;
- La fréquence d'accès au contenu ;
- Le type de contenu ;
- La fréquence d'accès à ce type de ce contenu ;
- La nature d'un réseau d'accès (wifi, 3G, ADSL, ou autres).

On peut donc établir dans le champ ETA précité une valeur correspondant à un score sur l'ensemble des critères ci-avant (outre bien entendu la nature de la source de stockage). Dans une réalisation possible, il peut être prévu un champ ETA sur un état de disponibilité de la source et un champ supplémentaire (de type « PRIO ») relatif à une priorité à affecter à certains contenus pour être copiés.
Ainsi, les contenus ayant une plus grande priorité pour être copiés et transférés sur l'espace de stockage sont les contenus les plus souvent utilisés et/ou les plus récents (contenus nommés « hot contents » en raison de l'intérêt qu'ils présentent pour l'utilisateur).
Typiquement, l'établissement des priorités permet avantageusement d'économiser les capacités de stockage d'un disque dur réseau DD par exemple, mais le cas échéant aussi d'une passerelle GW s'il n'est pas fourni de disque dure réseau en tant qu'espace de stockage, auquel cas la passerelle elle-même stocke ces contenus alors qu'elle dispose de moyens mémoire limités.
Par exemple, il peut être choisi que seuls les contenus issus d'équipements réellement personnels de l'utilisateur (smartphone, tablette, ou autres) peuvent être dupliqués. Par exemple, les contenus stockés sur des sources de contenus « publiques » telles que par exemple un disque dur réseau, ou un espace de partage en ligne (par exemple un serveur de stockage ou autre), ne sont pas dupliqués pour assurer une disponibilité optimale des contenus avec une consommation de ressource mémoire la plus petite possible.
Afin de gérer les capacités de l'espace de stockage, on prévoit en outre l'élimination de redondances de copies de contenus. Dans un exemple où un même contenu est stocké sur deux sources distinctes qui peuvent être rarement accessibles (smartphone et tablette par exemple), il est préférable que l'espace de stockage DD ne stocke qu'une seule copie de ce contenu. A cet effet, l'analyse de la base de données d'index par l'équipement gérant la base permet d'éviter la copie redondante. La gestion de redondance peut être faite à partir d'index identifiés comme redondants dans la base de données BDIND. Par exemple, en référence à la figure 3, si les index INDCi et INDCj décrivent deux contenus identiques provenant de deux sources différentes, alors on prévoit de n'émettre qu'un seul ordre de copie de ce contenu à l'espace de stockage à une unique adresse ADDR-STOK de l'espace DD pour ce contenu.
Bien entendu, dans une variante, l'analyse de la base d'index BDIND peut permettre de détecter les copies redondantes déjà stockées par l'espace DD et les supprimer, le cas échéant.
Ainsi, des informations contenues dans un index de contenu peuvent servir à supprimer les copies de ces contenus dans l'espace de stockage.
Par ailleurs, il est possible encore d'utiliser la base BDIND pour réaliser aussi des suppressions de contenus ou de copies de contenus stockées dans l'espace DD. A titre d'exemple alternatif encore, un filtre d'images d'une taille mémoire supérieure à une référence (par exemple des images de taille mémoire supérieure à 1000 Ko), peut être utilisé pour identifier toutes les entrées de la base d'index dont les index décrivent des images d'une taille supérieure à 1000 Ko. En conséquence, cette identification peut entraîner la suppression de toutes les copies de ces images dans l'espace de stockage. A l'inverse, les contenus non pertinents (par exemple une image inférieure à 1000 Ko) peuvent être effacés pour « nettoyer » les mémoires.
La base BDIND ainsi construite est utilisée pour produire sur une interface utilisateur une vue des contenus ne présentant :
- qu'une occurrence pour chaque contenu, quel que soit le nombre d'exemplaire(s) de ce contenu stocké(s) sur une ou plusieurs sources de stockage
- et que les contenus pertinents, avec par exemple un nettoyage des photos d'une taille mémoire inférieur à une référence (par exemple 1000 Ko).
Les copies respectives de contenus provenant d'au moins une source de contenu SRCi et qui sont transférées vers l'espace de stockage DD sont stockés dans cet espace de stockage, pour y organiser alors plusieurs copies de contenus en un ensemble structuré qui est adressable. A cet effet, l'équipement gérant la base de données BDIND peut piloter l'organisation des copies de contenus (par exemple la passerelle GW, pour un espace de stockage correspondant à un simple disque dur DD en réseau local avec la passerelle, ou encore un serveur distant SRV comportant une mémoire de stockage stockant des copies de contenus).
Cet ensemble structuré peut être une base de données répertoriant les copies de contenus d'un utilisateur, cette base étant gérée par l'équipement précité (passerelle ou serveur) de façon transparente pour l'utilisateur. Sur la figure 6, la référence ORG_CONT désigne une organisation au sein de l'espace de stockage DD de copies de contenus C1, C2, C3 et C4 dont les originaux sont stockés auprès de diverses sources SRC1, SRC2, SRC3, SRC4 respectivement.

Par ailleurs, il peut être pris en compte la nature d'un terminal requérant un contenu et en particulier la vitesse de transfert dans la communication des données de ce contenu entre ce terminal et l'espace de stockage DD, d'une part, et entre ce terminal et la source initiale de ce contenu, d'autre part. Par exemple, si la source initiale du contenu est accessible sur un réseau local par une liaison wifi et que le terminal requérant le contenu est connecté au réseau wifi, tandis que l'espace de stockage correspond dans ce cas à un serveur distant sur un réseau étendu, il est préférable ici d'organiser le transfert des données de ce contenu vers le terminal, depuis la source initiale et non pas depuis l'espace de stockage.

Plus généralement, les données de contenus peuvent transiter par différents réseaux et être lues par différents types de terminaux. Il se pose alors le problème d'une incompatibilité possible entre formats différents de contenus, d'une part, et de moyens de lecture des contenus, auprès des équipements, d'autre part.
Dans une réalisation, on prévoit avantageusement l'adaptation du format d'un contenu pour la lecture au moins de ce contenu par un terminal de l'utilisateur. L'adaptation du format d'un contenu, appelé ici « transcodage », peut être initiée suite à une analyse des informations données dans la base de données d'index BDIND. On a représenté sur la figure 3 à titre didactique les formats mp3 et wav pour deux fichiers audio à titre d'exemple. Néanmoins, il peut s'agir de données généralement indiquées dans le champ INDCi.
Cette analyse peut s'exécuter par une routine installée sur l'entité gérant la base de données d'index. Par exemple, cette entité peut accéder à une autre base de données, cette dernière étant propre aux équipements et comprenant au moins :
- des informations sur le profil de chaque équipement lecteur, par exemple sur les différents moyens de lecture possibles de l'équipement (formats compatibles, résolution d'écran de l'équipement pour une lecture vidéo auquel cas une adaptation du contenu à la source peut être effectuée notamment dans le cas où la source stocke différentes versions du contenu dans des résolutions différentes),
- des informations éventuelles sur un réseau communiquant les données du contenu (pour une mise en oeuvre de compression éventuelle dans le cas d'une transmission via un réseau à faible bande passante).
Dans ce mode, la routine analyse au moins l'ensemble des informations complémentaires dans la base de données d'index. L'analyse des informations obtenues dans la base de données d'index peut révéler que les caractéristiques du terminal lecteur ou les caractéristiques de la source ne sont pas adaptées pour une lecture adéquate d'un contenu. Ceci peut se produire par exemple lorsque le format d'un contenu n'est pas adapté aux capacités d'un terminal. Dans ce cas, on prévoit une adaptation de format du contenu. Cette adaptation peut être initiée au cours de la consultation de la base de données d'index suite à l'envoi d'une requête d'obtention de contenu.
Avantageusement, cette adaptation est effectuée « à la volée » (en temps réel et dynamiquement en fonction des changements des contraintes et capacités observées, par exemple une évolution de la bande passante offerte par le réseau de transport). Aussi, le transcodage à la volée peut être réalisé en mode serveur de fichiers « déportés » (avec une fonction proxy de type streamer, comme on le verra plus loin).
L'adaptation du contenu peut être gérée auprès de l'équipement gérant la base BDIND ou directement auprès de la source de ce contenu. Lorsque le terminal accède directement au contenu depuis la source de contenu, une transformation du format (par exemple une résolution d'image) du contenu peut être réalisée pour que le format transformé au niveau de la source soit adéquat pour une lecture par l'équipement requérant.

La transformation de format peut être réalisée sur la base de profils de terminaux définis au préalable (par exemple les profils adaptés à certains terminaux de référence et à certains services, les profils définis à l'aide de paramètres configurés, les profils standards assurant une lecture de contenu sur un plus grand nombre de terminaux et ce dans des conditions de réseaux de transport diverses). Les paramètres des ces profils peuvent être changés lors d'une mise à jour logicielle de la base de données d'index.

On peut prévoir en outre d'installer avec l'application d'interface précitée, sur chaque équipement personnel de l'utilisateur (ordinateurs, smartphone(s), tablette(s), etc.), un contrôleur de lecture de type DLNA / Airplay. Cette réalisation permet de « télécommander » (dans le sens d'une commande notamment de lecture à distance) de tous les contenus accessibles et déclarés dans la base BDIND, vers tout équipement lecteur (ou « renderer » au sens des techniques DLNA, pour « Digital Living Network Alliance », et AirPlay présentées ci-avant).
Contrairement à une application de contrôleur classique dans laquelle il est nécessaire de choisir la source de contenus (serveur média), l'application de lecture dans cette réalisation, grâce à l'agrégation et la mise à jour de la base BDIND et à sa représentation commune sur les lecteurs, permet une navigation et une sélection des contenus transparente pour l'utilisateur, notamment par rapport à la source dont est réellement issu un contenu. Contrairement à une application de contrôleur classique dans laquelle ne sont accessibles que les contenus publics partagés via un réseau DLNA, l'invention, dans cette réalisation, offre la possibilité de télécommander tous les contenus de chaque utilisateur, y compris les contenus privés non partagés dans le réseau DLNA, l'accessibilité pouvant toutefois être conditionnée par un identifiant et un mot de passe comme indiqué précédemment ou encore gérée selon le type de contenu ou de source de contenu. En outre, en intégrant à la fois un contrôleur DLNA et un contrôleur AirPlay, il est possible de télécommander la lecture vers tout type de lecteur (ou « renderer ») DLNA et AirPlay, à la fois.

Dans un mode de réalisation, une mémoire tampon TAMP (figure 6) est avantageusement prévue au sein de l'entité gérant la base de données d'index (la passerelle GW dans l'exemple de la figure 6) notamment pour harmoniser le temps de latence requis pour le transit des contenus.

Avantageusement, les fonctionnalités de l'équipement gérant les contenus (comme par exemple la passerelle GW précitée) peuvent être enrichies pour jouer le rôle de serveur de contenus, comme par exemple l'application serveur de type « Samba », et/ou de serveur de contenu multimédia (« Media Server », DLNA et/ou iTunes), et/ou de Web Server, et/ou de publication d'applications API pour une application client de gestion de contenus au sens de l'invention, et/ou de proxy pour l'accès à distance (accès à l'extérieur du réseau local, domestique, et accès à un fichier stocké sur un autre équipement). Ces fonctionnalités peuvent être mises en oeuvre de sorte que l'équipement gestionnaire opère en tant que serveur de fichiers « déportés » (avec une fonction proxy du type par diffusion ou « streamer ») pour les contenus dont les fichiers ne sont pas stockés dans l'équipement gestionnaire.
Ainsi, lorsque les contenus doivent être adaptés en transcodage ou lorsque l'équipement sur lequel sont stockés les contenus servis ne présente pas des capacités pour émettre ces contenus à un équipement lecteur dans de bonnes conditions de qualité de service (faible bande passante réseau, par exemple), les contenus « déportés » peuvent être servis à l'équipement lecteur via l'équipement gestionnaire et depuis l'équipement stockant le contenu.
Dans les autres situations (typiquement lorsque l'équipement stockant le contenu présente les capacités de servir ce contenu dans les bonnes conditions de format et de qualité de service), les fichiers déportés sont préférentiellement servis directement par l'équipement stockant le contenu. Ainsi, l'équipement gestionnaire de contenus, même s'il présente une vue unifié des contenus grâce à une gestion des contenus du type présentée ci-avant, peut effectuer une redirection de source de téléchargement des données de contenu, et ce de manière transparente pour l'utilisateur de l'équipement recevant ces données ou lisant le contenu.

L'invention peut alors s'appliquer dans de nombreuses situations du domaine de la gestion, de l'accès et du partage de contenus personnels, par exemple :
- sur des équipements de type disque dur réseau (ou « NAS ») et/ou lecteur /disque dur multimédia afin d'enrichir ces équipements de fonctionnalités pour mettre en oeuvre un service complet offrant un confort pour l'utilisateur, de façon originale et différenciante ;
- sur des équipements passerelle d'un réseau domestique local vers un réseau étendu de type CPE (pour « Customer Premises Equipment » ou Gateway ISP), ou un routeur quelconque, afin d'enrichir leurs fonctionnalités avec un service complet d'accès aux contenus en addition des fonctions d'accès aux services classiques ;
- sur des équipements terminaux de réception de télévision et données multimédias de type « Set Top Box », afin de compléter l'accès à des contenus (Live TV, catch-up TV et VOD) avec un accès aux contenus personnels ;
- sur des services en ligne pour un stockage et partage de contenus.

## Revendications

1. Procédé de gestion d'une pluralité de contenus stockés dans différentes sources de contenus et accessibles par un ensemble prédéterminé de terminaux connectés en réseau, comportant les étapes suivantes :
- agrégation (S4) d'index respectifs des contenus accessibles par les terminaux dudit ensemble, dans une base de données commune pour l'ensemble des terminaux, chaque contenu étant représenté par au moins un index (INDCi) comprenant des données d'information sur le contenu, dans lequel les données d'information sur un contenu comportent au moins une information sur un type de source de contenu (ETA),
- copie d'une partie au moins des contenus accessibles par les terminaux de l'ensemble précité en fonction d'une information sur une accessibilité des sources des contenus (ETA), de sorte que des priorités différentes soient affectées pour la copie en fonction de ladite accessibilité dans une mémoire d'un équipement connecté au réseau et accessible depuis les terminaux, dans lequel la source de contenu est un terminal et l'information sur le type de source de contenu (ETA) caractérise au moins un état du terminal allumé ou éteint et/ou connecté ou non
- interrogation, par une application d'interface commune étant installée dans chaque terminal dudit ensemble, de ladite base de données depuis chaque terminal et sélection, par ladite application d'interface, d'un contenu indexé dans la base de données pour accéder au contenu sélectionné depuis ledit terminal.

2. Procédé selon la revendication 1, dans lequel les index de la base comportent, pour chaque contenu, au moins un pointeur vers une source (Aₖ, Aₘ; ADDR-STOK), et une sélection d'un contenu pour accéder au contenu depuis un terminal comporte une sélection d'un pointeur vers au moins une source stockant ledit contenu.

3. Procédé selon la revendication 2, dans lequel une modification d'index d'un contenu stocké auprès d'une source génère une mise à jour correspondante de l'index de ce contenu dans la base d'index (BDIND).

4. Procédé selon l'unes des revendications 1 à 3, dans lequel les données d'information sur un contenu comportent des données d'identification d'un utilisateur propriétaire du contenu (IDENT).

5. Procédé selon l'une des revendications 1 à 4, dans lequel les données d'information sur un contenu comportent des données d'identification d'au moins un utilisateur avec qui le contenu est partagé, en association avec des données définissant des droits d'utilisation du contenu (PART).

6. Procédé selon l'une des revendications précédentes, comportant en outre une étape d'adaptation de format d'un contenu stocké auprès d'une source de contenu, pour une accessibilité du contenu auprès d'un terminal dudit ensemble de terminaux.

7. Procédé selon la revendication 6, dans lequel l'étape d'adaptation est mise en oeuvre auprès d'une passerelle (GW) entre un réseau local (LAN) et un réseau étendu (RE).

8. Programme informatique comportant des instructions pour la mise en oeuvre du procédé selon l'une des revendications précédentes, lorsque ce programme est exécuté par un processeur.

9. Equipement de gestion d'une pluralité de contenus stockés dans différentes sources de stockage et accessibles par un ensemble prédéterminé de terminaux connectés en réseau au moins à l'équipement, comportant des moyens de gestion d'une base de données comportant une agrégation (S4) d'index respectifs des contenus accessibles par chacun des terminaux dudit ensemble, chaque contenu étant représenté par au moins un index (INDCi) comprenant des données d'information sur le contenu, dans lequel les données d'information sur un contenu comportent au moins une information sur un type de source de contenu (ETA) et comportant des moyens de copie d'une partie au moins des contenus accessibles par les terminaux de l'ensemble précité en fonction d'une information sur une accessibilité des sources des contenus (ETA), de sorte que des priorités différentes soient affectées pour la copie en fonction de ladite accessibilité, dans une mémoire d'un équipement connecté au réseau et accessible depuis les terminaux, dans lequel la source de contenu est un terminal et l'information sur le type de source de contenu (ETA) caractérise au moins un état du terminal allumé ou éteint et/ou connecté ou non,
ladite base de données étant interrogeable depuis chaque terminal par l'exécution d'une application d'interface installée dans chaque terminal dudit ensemble, pour sélectionner un contenu indexé dans la base de données et accéder au contenu sélectionné depuis ledit terminal.

10. Système comportant un équipement selon la revendication 9, de gestion d'une pluralité de contenus stockés dans différentes sources de contenus, et un ensemble prédéterminé de terminaux connectés en réseau et ayant accès à la pluralité de contenus, chaque terminal comportant des moyens de mise en oeuvre d'une application d'interface commune à l'ensemble des terminaux, pour interroger ladite base de données depuis chaque terminal et sélectionner un contenu indexé dans la base de données pour accéder au contenu sélectionné depuis ledit terminal.

11. Procédé selon l'une des revendications 1 à 7, dans lequel, chaque terminal comportant des moyens de mise en oeuvre d'une application d'interface commune à l'ensemble des terminaux, chaque terminal dudit ensemble de terminaux, pour accéder à un contenu sélectionné depuis ce terminal:
- interroge ladite base de données, et
- sélectionne un contenu indexé dans la base de données.

12. Programme informatique d'interface d'accès à un contenu, comportant des instructions pour la mise en oeuvre du procédé selon la revendication 11, lorsque ce programme est exécuté par un processeur d'un terminal dudit ensemble de terminaux.

## Patentansprüche

1. Verfahren zur Verwaltung einer Vielzahl von Inhalten, die in verschiedenen Inhaltsquellen gespeichert sind und für eine vorbestimmte Gesamtheit von vernetzten Endgeräten zugänglich sind, umfassend die folgenden Schritte:
- Aggregation (S4) von jeweiligen Indexen der Inhalte, die für die Endgeräte der Gesamtheit zugänglich sind, in einer für die Gesamtheit der Endgeräte gemeinsamen Datenbank, wobei jeder Inhalt durch mindestens einen Index (INDCi) repräsentiert wird, der Informationsdaten über den Inhalt umfasst, wobei die Informationsdaten über einen Inhalt mindestens eine Information über einen Inhaltsquellentyp (ETA) umfassen,
- Kopieren mindestens eines Teils der Inhalte, die für die Endgeräte der vorgenannten Gesamtheit zugänglich sind, in Abhängigkeit von einer Information über eine Zugänglichkeit der Inhaltsquellen (ETA), so dass verschiedene Prioritäten für die Kopie in Abhängigkeit von der Zugänglichkeit in einem Speicher einer Einrichtung, die mit dem Netzwerk verbunden ist und für die Endgeräte zugänglich ist, zugewiesen werden, wobei die Inhaltsquelle ein Endgerät ist und die Information über den Inhaltsquellentyp (ETA) mindestens einen Zustand des eingeschalteten oder ausgeschalteten und/oder verbundenen oder nicht verbundenen Endgeräts kennzeichnet,
- Abfragen der Datenbank von jedem Endgerät aus über eine gemeinsame Schnittstellenanwendung, die in jedem Endgerät der Gesamtheit installiert ist, und Auswählen eines indexierten Inhalts in der Datenbank über die Schnittstellenanwendung, um von dem Endgerät aus auf den ausgewählten Inhalt zuzugreifen.

2. Verfahren nach Anspruch 1, bei dem die Indexe der Datenbank für jeden Inhalt mindestens einen Zeiger auf eine Quelle (Aₖ, Aₘ; ADDR-STOK) umfassen und eine Auswahl eines Inhalts, um von einem Endgerät auf den Inhalt zuzugreifen, eine Auswahl eines Zeigers auf mindestens eine Quelle, die diesen Inhalt speichert, umfasst.

3. Verfahren nach Anspruch 2, bei dem eine Indexänderung eines bei einer Quelle gespeicherten Inhalts eine entsprechende Aktualisierung des Indexes dieses Inhalts in der Indexdatenbank (BDIND) erzeugt.

4. Verfahren nach einem der Ansprüche 1 bis 3, bei dem die Informationsdaten über einen Inhalt Identifikationsdaten eines Nutzers umfassen, der Eigentümer des Inhalts ist (IDENT).

5. Verfahren nach einem der Ansprüche 1 bis 4, bei dem die Informationsdaten über einen Inhalt Identifikationsdaten mindestens eines Nutzers, mit dem der Inhalt geteilt wird, in Verbindung mit Daten, die Nutzungsberechtigungen des Inhalts definieren, umfassen (PART) .

6. Verfahren nach einem der vorhergehenden Ansprüche, umfassend ferner einen Schritt des Anpassens des Formats eines Inhalts, der bei einer Inhaltsquelle gespeichert ist, zwecks einer Zugänglichkeit des Inhalts für ein Endgerät der Gesamtheit von Endgeräten.

7. Verfahren nach Anspruch 6, bei dem der Schritt des Anpassens in einem Gateway (GW) zwischen einem lokalen Netzwerk (LAN) und einem Weitverkehrsnetz (RE) ausgeführt wird.

8. Computerprogramm mit Anweisungen zum Ausführen des Verfahrens nach einem der vorgehenden Ansprüche, wenn dieses Programm von einem Prozessor abgearbeitet wird.

9. Einrichtung zur Verwaltung einer Vielzahl von Inhalten, die in verschiedenen Speicherquellen gespeichert sind und für eine vorbestimmte Gesamtheit von zumindest mit der Einrichtung vernetzten Endgeräten zugänglich sind, umfassend Mittel zur Verwaltung einer Datenbank, umfassend eine Aggregation (S4) von jeweiligen Indexen der Inhalte, die für jedes der Endgeräte der Gesamtheit zugänglich sind, wobei jeder Inhalt durch mindestens einen Index (INDCi) repräsentiert wird, der Informationsdaten über den Inhalt umfasst, wobei die Informationsdaten über einen Inhalt mindestens eine Information über einen Inhaltsquellentyp (ETA) umfassen, und umfassend Mittel zum Kopieren mindestens eines Teils der Inhalte, die für die Endgeräte der vorgenannten Gesamtheit zugänglich sind, in Abhängigkeit von einer Information über eine Zugänglichkeit der Inhaltsquellen (ETA), so dass verschiedene Prioritäten für die Kopie in Abhängigkeit von der Zugänglichkeit zugewiesen werden, in einem Speicher einer Einrichtung, die mit dem Netzwerk verbunden ist und von den Endgeräten aus zugänglich ist, wobei die Inhaltsquelle ein Endgerät ist und die Information über den Inhaltsquellentyp (ETA) mindestens einen Zustand des eingeschalteten oder ausgeschalteten und/oder verbundenen oder nicht verbundenen Endgeräts kennzeichnet,
wobei die Datenbank von jedem Endgerät aus durch das Ausführen einer Schnittstellenanwendung, die in jedem Endgerät der Gesamtheit installiert ist, abfragbar ist, um einen in der Datenbank indexierten Inhalt auszuwählen und von dem Endgerät aus auf den ausgewählten Inhalt zuzugreifen.

10. System mit einer Einrichtung nach Anspruch 9 zur Verwaltung einer Vielzahl von Inhalten, die in verschiedenen Inhaltsquellen gespeichert sind, und einer vorbestimmten Gesamtheit von Endgeräten, die vernetzt sind und Zugang zu der Vielzahl von Inhalten haben, wobei jedes Endgerät Mittel zum Ausführen einer für die Gesamtheit der Endgeräte gemeinsamen Schnittstellanwendung umfasst, um die Datenbank von jedem Endgerät aus abzufragen und einen in der Datenbank indexierten Inhalt auszuwählen, um von dem Endgerät aus auf den Inhalt zuzugreifen.

11. Verfahren nach einem der Ansprüche 1 bis 7, bei dem, wobei jedes Endgerät Mittel zum Ausführen einer für die Gesamtheit der Endgeräte gemeinsamen Schnittstellenanwendung hat, jedes Endgerät der Gesamtheit von Endgeräten, um auf einen von diesem Endgerät aus ausgewählten Inhalt zuzugreifen:
- die Datenbank abfragt und
- einen in der Datenbank indexierten Inhalt auswählt.

12. Computerprogramm für eine Zugangsschnittstelle zu einem Inhalt mit Anweisungen zum Ausführen des Verfahrens nach Anspruch 11, wenn dieses Programm von einem Prozessor eines Endgeräts der Gesamtheit von Endgeräten abgearbeitet wird.

## Claims

1. Method for managing a plurality of contents stored in various sources of contents and accessible by a predetermined set of terminals connected in a network, comprising the following steps:
- aggregation (S4) of respective indexes of the contents accessible by the terminals of said set, in a common database for the set of terminals, each content being represented by at least one index (INDCi) comprising information data on the content, in which the information data on a content comprise at least one information item on a type of content source (ETA),
- copying of a part at least of the contents accessible by the terminals of the aforementioned set as a function of an information item on an accessibility of the sources of the contents (ETA), so that different priorities are assigned for the copying as a function of said accessibility in a memory of an equipment item connected to the network and accessible from the terminals, in which the content source is a terminal and the information item on the type of content source (ETA) characterizes at least one state of the terminal on or off and/or connected or not
- interrogation, by a common interface application being installed in each terminal of said set, of said database from each terminal and selection, by said interface application, of a content indexed in the database in order to access the content selected from said terminal.

2. Method according to Claim 1, in which the indexes of the base comprise, for each content, at least one pointer to a source (Aₖ, Aₘ; ADDR-STOK), and a selection of a content in order to access the content from a terminal comprises a selection of a pointer to at least one source storing said content.

3. Method according to Claim 2, in which a modification of index of a content stored at a source generates a corresponding updating of the index of this content in the base of index (BDIND).

4. Method according to one of Claims 1 to 3, in which the information data on a content comprise data for identifying a proprietor user who owns the content (IDENT).

5. Method according to one of Claims 1 to 4, in which the information data on a content comprise data for identifying at least one user with whom the content is shared, in association with data defining rights of use of the content (PART).

6. Method according to one of the preceding claims, further comprising a step of adaptation of format of a content stored at a content source, for an accessibility of the content at a terminal of said set of terminals.

7. Method according to Claim 6, in which the adaptation step is implemented at a gateway (GW) between a local area network (LAN) and a wide area network (RE).

8. Computer program comprising instructions for the implementation of the method according to one of the preceding claims, when this program is executed by a processor.

9. Equipment item for managing a plurality of contents stored in various storage sources and accessible by a predetermined set of terminals connected in a network at least to the equipment item, comprising means for managing a database comprising an aggregation (S4) of respective indexes of the contents accessible by each of the terminals of said set, each content being represented by at least one index (INDCi) comprising information data on the content, in which the information data on a content comprise at least one information item on a type of content source (ETA) and comprising means for copying a part at least of the contents accessible by the terminals of the aforementioned set as a function of an information item on an accessibility of the sources of the contents (ETA), so that different priorities are assigned for the copying as a function of said accessibility, in a memory of an equipment item connected to the network and accessible from the terminals, in which the content source is a terminal and the information item on the type of content source (ETA) characterizes at least one state of the terminal on or off and/or connected or not,
said database being interrogatable from each terminal by the execution of an interface application installed in each terminal of said set, in order to select a content indexed in the database and to access the content selected from said terminal.

10. System comprising an equipment item according to Claim 9, for managing a plurality of contents stored in various sources of contents, and a predetermined set of terminals connected in a network and having access to the plurality of contents, each terminal comprising means for implementing an interface application common to the set of terminals, in order to interrogate said database from each terminal and to select a content indexed in the database in order to access the content selected from said terminal.

11. Method according to one of Claims 1 to 7, in which, each terminal comprising means for implementing an interface application common to the set of terminals,
each terminal of said set of terminals, in order to access a content selected from this terminal:
- interrogates said database, and
- selects a content indexed in the database.

12. Interface computer program for access to a content, comprising instructions for the implementation of the method according to Claim 11, when this program is executed by a processor of a terminal of said set of terminals.
